# EUROPEAN PATENT APPLICATION

(11) **EP 4 827 108 A1**
(43) Date of publication of application: **21.10.2026**
(21) Application number: 24902836.6
(22) Date of filing: 11.12.2024
(51) Int. Cl.: H04N 25/70

(54) **PIXEL ARRAY AND READOUT METHOD THEREFOR, AND IMAGE SENSOR**

(30) Priority: 15.12.2023 CN 202311736461; 19.12.2023 CN 202311753745
(71) Applicant: Hangzhou Hikmicro Sensing Technology Co., Ltd., Hangzhou Zhejiang 311501 (CN)
(72) Inventor: LIU, Jun, Hangzhou, Zhejiang 311501 (CN); HE, Jia, Hangzhou, Zhejiang 311501 (CN); ZHANG, Zhiyuan, Hangzhou, Zhejiang 311501 (CN)
(74) Representative: 2SPL Patentanwälte PartG mbB
(86) International application number: PCT/CN2024/138350
(87) International publication number: WO 2025/124416

(57) **Abstract**

The present disclosure relates to the technical field of infrared light. Provided are a pixel array and a readout method therefor, and an image sensor, which are used for improving the readout speed of pixel information. The pixel array comprises: a plurality of pixel columns, wherein for each of the plurality of pixel columns, the pixel column comprises Y pixels; the pixel column comprises a plurality of pixel groups, one of the plurality of pixel groups comprises y adjacent pixels or one pixel among the Y pixels, and 2≤y<Y/2; an odd-numbered pixel group among the plurality of pixel groups is electrically connected to a first readout bus, and an even-numbered pixel group among the plurality of pixel groups is electrically connected to a second readout bus; the pixel column comprises a plurality of synchronization pixel groups, one of the plurality of synchronization pixel groups comprises an odd-numbered pixel group and an even-numbered pixel group which are adjacent among the plurality of pixel groups, information of a plurality of pixels in one of the plurality of synchronization pixel groups is read out by the first readout bus and the second readout bus, and the plurality of synchronization pixel groups are sequentially read out; and the information of the pixels being read out refers to the pixels being connected to the corresponding first readout bus or second readout bus.

## Description

### CROSS REFERENCE TO RELATED APPLICATIONS

This application claims priority to Chinese Patent Applications No. 202311736461.0, filed on December 15, 2023 and No. 202311753745.0, filed on December 19, 2023, the entire contents of the mentioned applications are incorporated herein by reference.

### TECHNICAL FIELD

This disclosure relates to the field of infrared light technologies, and in particular, to a pixel array, a readout method thereof, and an image sensor.

### BACKGROUND

With the rapid development of communication technologies and people's pursuit of color and display practicality of display devices, display devices are developing towards multi-functionality and digitalization. Specifically, modern display devices are developing towards high density, high resolution, energy saving, high brightness, colorization, and large screens.

High resolution has become an important metric for image sensors. The higher the resolution, the larger the required pixel array. The larger the pixel array, the longer the pixel information processing time and the slower the frame rate. For an image sensor that requires fast response, high resolution and high frame rate are two conflicting metrics.

### SUMMARY

Examples of the present disclosure provide a pixel array, a readout method, and an image sensor.

According to a first aspect, the present disclosure provides a pixel array, including: a plurality of columns of pixel columns, where for each column in the plurality of columns of pixel columns, the pixel column comprises Y pixels, the pixel column comprises a plurality of pixel groups, and each pixel group of the plurality of pixel groups comprises y adjacent pixels of the Y pixels or one pixel of the Y pixels, wherein 2≤ y<Y/2, where each odd-numbered pixel group of the plurality of pixel groups is electrically connected to a first readout bus, each even-numbered pixel group of the plurality of pixel groups is electrically connected to a second readout bus, where the pixel column comprises a plurality of synchronous pixel groups, a synchronous pixel group of the plurality of synchronous pixel groups comprises an odd-numbered pixel group and an even-numbered pixel group adjacent to each other in the plurality of pixel groups, information of a plurality of pixels in a synchronous pixel group of the plurality of synchronous pixel groups is read out by the first readout bus and the second readout bus, and the plurality of synchronous pixel groups are read out sequentially, where information of a pixel being read out indicates that the pixel conducts to a corresponding first readout bus or second readout bus.

According to the pixel array provided in some examples of the present disclosure, the pixel array is able to read information of two pixels, so that a readout rate of the pixels may be increased, and circuit design difficulty is reduced, that is, a frame rate is increased in a case of a high resolution. Meanwhile, for the integrating type of pixel processing circuit, the upper limit of the integration time can be further improved, thereby improving the performance.

In some examples, the plurality of pixel groups are X1 pixel groups, wherein Y/y = X1, and X1 is an integer; or the plurality of pixel groups are (X2 + 1) pixel groups, wherein Y/y = X2 with a remainder of X3, and the remaining X3 pixels form a last pixel group among the (X2+ 1) pixel groups.

In some examples, information of the plurality of pixels in each synchronous pixel group of the plurality of synchronous pixel groups being read out includes: information of one pixel in the odd-numbered pixel group and information of one pixel in the even-numbered pixel group in the synchronous pixel group being read out simultaneously.

In some examples, each pixel of the Y pixels comprises a pixel resistor, a first selected switch, a second selected switch, and a shorting switch; where the first selected switch is configured to conduct the pixel resistor to the corresponding first readout bus or the second readout bus, and the second selected switch is configured to conduct the pixel resistor to a reset terminal; where the shorting switch is connected in parallel with the pixel resistor, and is configured to be capable of short-circuiting the pixel resistor; the pixel resistors of the Y pixels are sequentially connected in series; and in a case where the first selected switch and the second selected switch corresponding to a pixel are closed and the shorting switch corresponding to the pixel is open, information of the pixel is read out.

In some examples, a first terminal of the first selected sub-switch is electrically connected to the first readout bus or the second readout bus, a second terminal of the first selected sub-switch is electrically connected to a first end of the pixel resistor, a second end of the pixel resistor is electrically connected to a first terminal of the second selected sub-switch, and a second terminal of the second selected sub-switch is electrically connected to the reset terminal.

In some examples, in a stage in which information of two pixels in a synchronous pixel group is read out, the shorting switches of two pixels read out in an immediately preceding stage remain open.

In some examples, every two adjacent pixels in the Y pixels form a pixel group; each odd-numbered pixel group is electrically connected to the first readout bus, and each even-numbered pixel group is electrically connected to the second readout bus; starting from a first pixel group, every odd-numbered pixel group and even-numbered pixel group adjacent to each other form a synchronous pixel group, information of each pixel in a synchronous pixel group is read out, and the plurality of synchronous pixel groups are read out in sequence.

In some examples, each pixel of the Y pixels forms a pixel group; each odd-numbered pixel group is electrically connected to the first readout bus, and each even-numbered pixel group is electrically connected to the second readout bus; starting from a first pixel group, every odd-numbered pixel group and even-numbered pixel group adjacent to each other form a synchronous pixel group, information of each pixel in a synchronous pixel group is read out, and the plurality of synchronous pixel groups are read out in sequence.

According to a second aspect, some examples of the present disclosure provide a readout method for a pixel array, where the pixel array includes a plurality of pixel columns, and for each of the plurality of pixel columns, the pixel column comprises Y pixels, where the pixel column comprises a plurality of pixel groups, each pixel group of the plurality of pixel groups comprises y adjacent pixels of the Y pixels or one pixel of the Y pixels, where 2≤ y<Y/2, each odd-numbered pixel group of the plurality of pixel groups is electrically connected to a first readout bus, and each even-numbered pixel group of the plurality of pixel groups is electrically connected to a second readout bus, wherein the pixel column comprises a plurality of synchronous pixel groups, and each synchronous pixel group of the plurality of synchronous pixel groups comprises an odd-numbered pixel group and an even-numbered pixel group adjacent to each other in the plurality of pixel groups; a readout stage of the pixel array comprises a first readout stage to an N-th readout stage arranged in sequence, where N = M/2, and M is a number of rows of the pixel array.

The readout method includes: in each readout stage from the first readout stage to the N-th readout stage, information of two pixels in a synchronous pixel group being read out by the first readout bus and the second readout bus respectively; sequentially reading out the plurality of synchronous pixel groups, wherein information of each pixel in each synchronous pixel group of the plurality of synchronous pixel groups is read out; where information of a pixel being read out indicates that the pixel conducts to a corresponding first readout bus or second readout bus.

Beneficial effects that can be achieved by the pixel array readout method provided in some examples of the present disclosure are the same as the beneficial effects that can be achieved by the pixel array provided in the foregoing technical solutions, and details are not described herein again.

In some examples, the information of two pixels in a synchronous pixel group being read by the first readout bus and the second readout bus respectively includes: information of one pixel in the odd-numbered pixel group in the synchronous pixel group is read out by one of the first readout bus and the second readout bus; and information of one pixel in the even-numbered pixel group in the synchronous pixel group is read out by the other of the first readout bus and the second readout bus.

In some examples, each pixel of the Y pixels comprises a pixel resistor, a first selected sub-switch, a second selected sub-switch, and a shorting switch.

In the first readout stage, the first selected sub-switches and the second selected sub-switches of two pixels in a first synchronous pixel group are closed, the shorting switches of the two pixels are open, the first selected sub-switches and the second selected sub-switches of other pixels except the two pixels read out in the first readout stage are open, and the shorting switches of other pixels except the two pixels read out are closed.

In each readout stage from the second readout stage to the N-th readout stage, the first selected sub-switches and the second selected sub-switches of the two pixels in the synchronous pixel group corresponding to the readout stage are closed; the first selected sub-switches and the second selected sub-switches of other pixels except the two pixels read out in the readout stage are all open, and the shorting switches of the two pixels read out in the readout stage and two pixels read out in an immediately preceding stage are open, while the shorting switches of other pixels are closed.

In some examples, in each readout stage from the first readout stage to the N-th readout stage, for each pixel in the readout stage, the first selected sub-switch is closed before the second selected sub-switch is closed, and a closed duration of the first selected sub-switch is equal to the closed duration of the second selected sub-switch.

In some examples, the readout method includes: simultaneously reading out a plurality of synchronous pixel groups in a same row in the plurality of pixel columns.

According to a third aspect, some examples of the present disclosure provide an image sensor, where the image sensor includes a pixel array, a first readout circuit, a second readout circuit, and an analog-to-digital conversion circuit.

The pixel array is configured to acquire an infrared signal; the first readout circuit includes a plurality of first readout buses, and the second readout circuit includes a plurality of second readout buses; the first readout circuit and the second readout circuit are configured to convert the infrared signal into a detection signal and output the detection signal as an analog signal; and the analog-to-digital conversion circuit is electrically connected to the first readout circuit and the second readout circuit.

In some examples, the first readout circuit includes a first pixel bias resistor, the second readout circuit comprises a second pixel bias resistor, and the first pixel bias resistor and the second pixel bias resistor are located on a same side of the pixel array.

In some examples, the first readout circuit includes a plurality of first readout sub-circuits, and the second readout circuit comprises a plurality of second readout sub-circuits; each of the first readout sub-circuits is electrically connected to a first readout bus that is connected to a pixel column, and each of the second readout sub-circuits is electrically connected to a second readout bus that is connected to a pixel column.

Beneficial effects that can be achieved by the image sensor provided in some examples of the present disclosure are the same as beneficial effects that can be achieved by the pixel array provided in the foregoing technical solutions, and details are not described herein again.

### BRIEF DESCRIPTION OF DRAWINGS

FIG. 1 illustrates a circuit diagram of a pixel array in the related art according to some examples of the present disclosure.
FIG. 2 illustrates a schematic structural diagram of a pixel array in the related art according to some examples of the present disclosure.
FIG. 3 illustrates a schematic structural diagram of a pixel array according to some examples of the present disclosure.
FIG. 4 illustrates a circuit diagram of a pixel array according to some examples of the present disclosure.
FIG. 5 illustrates a timing diagram of reading out a pixel array according to some examples of the present disclosure.
FIG. 6 illustrates a circuit diagram of another pixel array according to some examples of the present disclosure.
FIG. 7 illustrates a circuit diagram of yet another pixel array according to some examples of the present disclosure.
FIG. 8 illustrates a schematic structural diagram of an image sensor according to some examples of the present disclosure.
FIG. 9 illustrates a circuit diagram of a readout circuit according to some examples of the present disclosure.

### DETAILED DESCRIPTION

Hereinafter, the technical solutions in some examples of the present disclosure will be clearly and completely described with reference to the accompanying drawings. It is obvious that the described examples are only a part of, rather than all of, the examples of the present disclosure. All other examples obtained by a person of ordinary skill in the art based on the examples provided in the present disclosure shall fall within the scope of the present disclosure.

Unless otherwise required by the context, the term "comprising" throughout the specification and the claims is to be interpreted as open-ended and inclusive, i.e., "including, but not limited to". In the description of the specification, the terms "an embodiment", "some examples", "exemplary embodiment", "example", or "some examples" are intended to indicate that a particular feature, structure, material, or characteristic related to the embodiment or example is included in at least one embodiment or example of the present disclosure. The schematic representations of the above terms do not necessarily refer to the same embodiment or example. Furthermore, the particular features, structures, materials, or characteristics may be included in any suitable manner in any one or more embodiments or examples.

With the rapid development of communication technologies and people's pursuit of color and display practicality of display devices, display devices are developing towards multi-functionality and digitalization. Specifically, modern display devices are developing towards high density, high resolution, energy saving, high brightness, colorization, and large screens. High resolution has become an important metric for image sensors. The higher the resolution, the larger the required pixel array. The larger the pixel array, the longer the pixel information processing time and the slower the frame rate. For an image sensor that requires fast response, high resolution and high frame rate are two conflicting metrics.

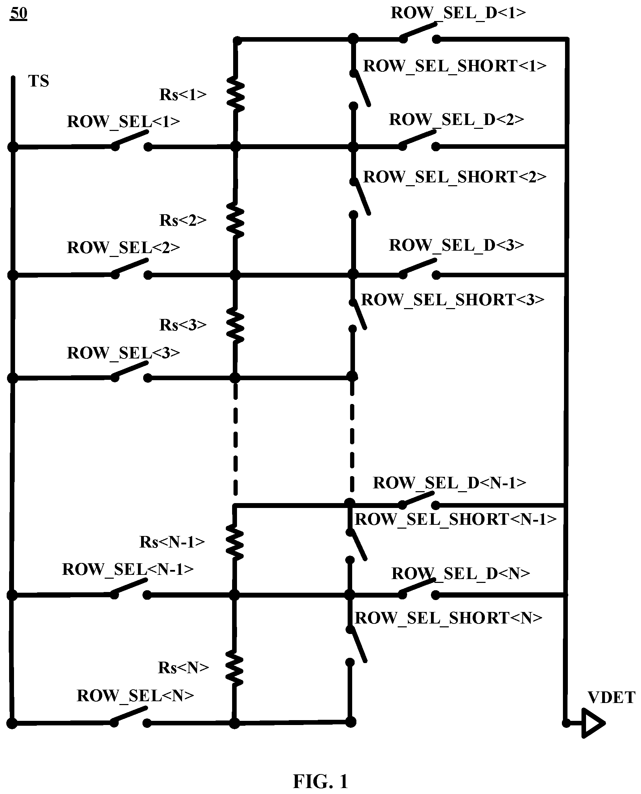

Referring to FIG. 1, the pixel array 50 includes pixel resistors Rs, first selected sub-switches ROW_SEL, second selected sub-switches ROW_SEL_D, and shorting switches ROW_SEL_SHORT. When the first pixel resistor Rs<1> is connected to a readout circuit, the first first selected sub-switch ROW_SEL<1> and the first second selected sub-switch ROW_SEL_D<1> are closed, the first shorting switch ROW_SEL_SHORT<1> is open, one end of the first pixel resistor Rs<1> conducts to the readout circuit TS through the first first selected sub-switch ROW_SEL<1>, the other end of the first pixel resistor Rs<1> conducts to the reset terminal VDET through the first second selected sub-switch ROW_SEL_D<1>, all other switches are open. At this time, the first pixel resistor Rs<1> is read out. When the second pixel resistor is connected to the readout circuit, the second first selected sub-switch ROW_SEL<2> and the second second selected sub-switch ROW_SEL_D<2> are closed, the second shorting switch ROW_SEL_SHORT<2> is open, one end of the second pixel resistor Rs<2> conducts to the readout circuit TS through the second first selected sub-switch ROW_SEL<2>, the other end of the second pixel resistor Rs<2> conducts to the reset terminal VDET through the second second selected sub-switch ROW_SEL_D<2>, all other switches are open. At this time, the second pixel resistor Rs<2> is read out. The reset can be deduced by analogy.

A plurality of pixels in a photosensitive region of the sensor are arranged in a one-dimensional or two-dimensional matrix, where a pixel is a single photosensitive unit, and the resolution of the image sensor is determined by the number of pixels in the horizontal and vertical directions of the matrix, that is, the number of pixels of the image sensor equals the resolution, and the photosensitive unit may be represented by a pixel resistor Rs in FIG. 1. The readout circuit Ts reads out the pixel resistors row by row and column by column, and the readout rate is the frame rate; the larger the pixel array, the more information is contained in the image, but the slower the readout rate; the smaller the pixel array, the less information is contained in the image, and the faster the readout rate. That is, if a high readout rate is desired, the resolution is lower, and if a high resolution is desired, the readout rate is slower.

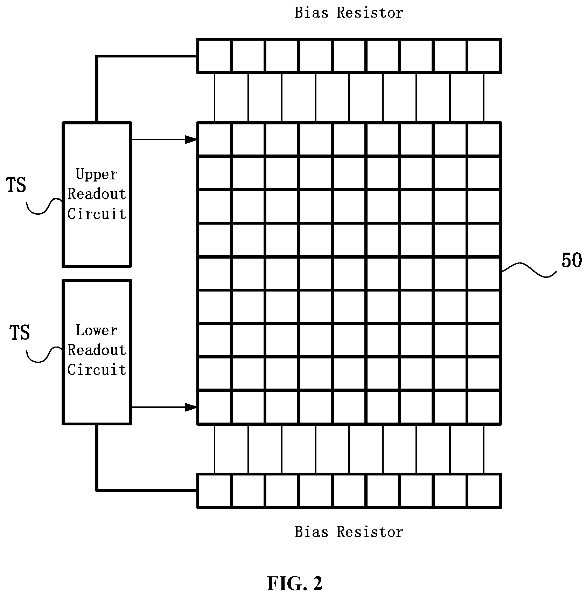

Referring also to FIG. 2, FIG. 2 illustrates a connection manner of a pixel array and a readout circuit in the related art. In the related art, the readout circuit adopts a solution of an over-under arrangement. In this solution, the part of the readout circuit except the bias resistors, and the bias resistors in the readout circuit are distributed in the upper and lower regions of the entire pixel array. Due to the manufacturing process, the farther the distance between the pixel array and the bias resistors, the larger the deviation between the readout pixel information and the actual pixel information. Therefore, in the final image, the pixel points read out by the upper and lower readout circuits may exhibit obvious upper-lower layering, which is not conducive to the extraction of fixed pattern noise (FPN).

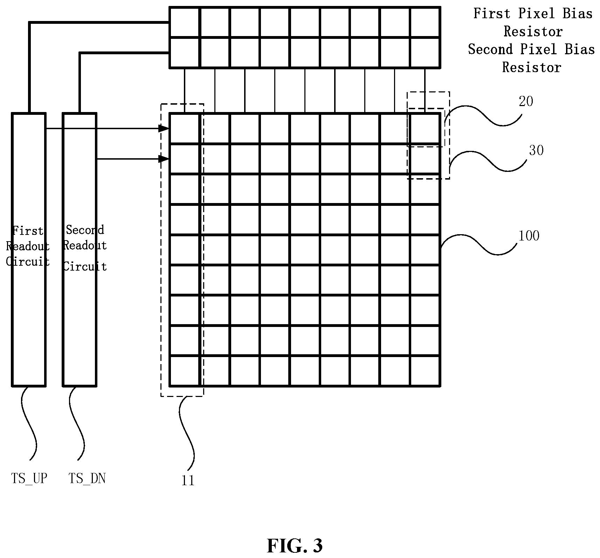

Based on this, some examples of the present disclosure provide a pixel array 100. As shown in FIG. 3, the pixel array 100 includes a plurality of pixel columns 11. Each pixel column 11 includes Y pixels, and each pixel column 11 is electrically connected to one first readout bus TS_UP and one second readout bus TS_DN.

Among the Y pixels, every y adjacent pixels form a pixel group 20, or each individual pixel among the plurality of pixels forms a pixel group 20. Each odd-numbered pixel group is electrically connected to the first readout bus TS_UP, and each even-numbered pixel group is electrically connected to the second readout bus TS_DN, where 2≤ y<Y/2.

For example, one pixel forms a pixel group. The first pixel group is electrically connected to the first readout bus TS_UP, that is, the first pixel is electrically connected to the first readout bus TS_UP; the second pixel group is electrically connected to the second readout bus TS_DN, that is, the second pixel is electrically connected to the second readout bus TS_DN; the third pixel group is electrically connected to the first readout bus TS_UP, that is, the third pixel is electrically connected to the first readout bus TS_UP; the fourth pixel group is electrically connected to the second readout bus TS_DN, that is, the fourth pixel is electrically connected to the second readout bus TS_DN, and so on.

If every two adjacent pixels in the plurality of pixels form a pixel group, that is, two pixels form a pixel group, the first pixel group is electrically connected to the first readout bus TS_UP, that is, the first pixel and the second pixel are electrically connected to the first readout bus TS_UP; the second pixel group is electrically connected to the second readout bus TS_DN, that is, the third pixel and the fourth pixel are electrically connected to the second readout bus TS_DN, and so on.

Starting from the first pixel group, every odd-numbered pixel group and even-numbered pixel group adjacent to each other form a synchronous pixel group 30, information of a plurality of pixels in a synchronous pixel group is read out by the first readout bus and the second readout bus; and a plurality of synchronous pixel groups are read out in sequence.

That the information of a plurality of pixels in a synchronous pixel group is read out by the first readout bus and the second readout bus means that information of some pixels in the plurality of pixels is read out by the first readout bus, and information of the other pixels is read out by the second readout bus.

In an example, the information of some pixels and the information of the other pixels in a synchronous pixel group may be synchronously read out by the first readout bus and the second readout bus, respectively. "Synchronously read out" includes that the information of some pixels in a synchronous pixel group and the information of the other pixels in the synchronous pixel group may be simultaneously read out by the first readout bus and the second readout bus respectively, and may also include that some pixels first start to be read out by the first readout bus, and after the first readout bus has started to read, the other pixels start to be read out by the second readout bus, that is, the first readout bus and the second readout bus start to read successively, with a small time difference between the times when they start reading.

In an example, information of the plurality of pixels in a synchronous pixel group 30 being read out includes: information of one pixel in the odd-numbered pixel group and information of one pixel in the even-numbered pixel group being read out simultaneously.

For example, one pixel forms a pixel group 20. The first pixel group and the second pixel group form the first synchronous pixel group, and information of the first pixel and the second pixel of the first synchronous pixel group are read out. The third pixel group and the fourth pixel group form the second synchronous pixel group, after the first synchronous pixel group is read out, information of the third pixel and the fourth pixel of the second synchronous pixel group are read out, and so on, each synchronous pixel group is read out in sequence. In the entire pixel array, it is equivalent to reading out information of each pixel in the pixel array 100 two rows at a time, in sequence from top to bottom, for example, information of the first row and the second row of the pixels is read out, then information of the third row and the fourth row of the pixels is read out, then information of the fifth row and the sixth row of the pixels is read out, and so on, until information of the (Y-1)-th row and the Y-th row of the pixels is read out.

If every two adjacent pixels in the plurality of pixels form a pixel group 20, that is, two pixels form a pixel group 20. The first pixel group and the second pixel group form the first synchronous pixel group. Information of the first pixel and the third pixel of the first synchronous pixel group is read out, and after the information of the first pixel and the third pixel is read out, information of the second pixel and the fourth pixel is read out. The third pixel group and the fourth pixel group form the second synchronous pixel group. After the first synchronous pixel group is read out, information of the fifth pixel and the seventh pixel of the second synchronous pixel group is read out, after the information of the fifth pixel and the seventh pixel is read out, information of the sixth pixel and the eighth pixel is read out, and so on, each synchronous pixel group 30 is read out in sequence. In the entire pixel array, it is equivalent to reading out information of each pixel in the pixel array 100 from top to bottom. For example, information of the first row and the third row of pixels is read out, then information of the second row and the fourth row of pixels is read out, then information of the fifth row and the seventh row of pixels is read out, then information of the sixth row and the eighth row of pixels is read out, and so on, until information of the (Y - 3)th row and the (Y - 1)th row of pixels is read out, and information of the (Y - 2)th row and the Yth row of pixels is read out.

The information of the pixel being read out means that the pixel conducts to the corresponding first readout bus TS_UP or second readout bus TS_DN.

It should be noted that the odd-numbered pixel group is electrically connected to the first readout bus TS_UP, the even-numbered pixel group is electrically connected to the second readout bus TS_DN, and the electrical connection only means that the pixel group is connected to the first readout bus TS_UP or the second readout bus TS_DN, but there is no conduction between the pixel group and the first readout bus TS_UP or the second readout bus TS_DN. Only when a pixel conducts to the corresponding first readout bus TS_UP, can the information of the pixel be transmitted to the first readout bus TS_UP; only when a pixel conducts to the corresponding second readout bus TS_DN, can the information of the pixel be transmitted to the second readout bus TS_DN.

In some examples, if only one pixel group remains and cannot form a synchronous pixel group, after pixel information of the previous synchronous pixel group is read out, this pixel group may be connected to the first readout bus TS_UP, and the pixel information is read out.

For example, Y = 10, y = 2, that is, each pixel column includes 10 pixels, and every two adjacent pixels in the 10 pixels form a pixel group, there are 5 pixel groups in total. Every odd-numbered pixel group and even-numbered pixel group adjacent to each other form a synchronous pixel group, there are two synchronous pixel groups in total. Finally one pixel group remains, where the pixel group may be electrically connected to the first readout bus TS_UP.

Some examples of the present disclosure provide a pixel array, each pixel column in the pixel array is electrically connected to a first readout bus TS_UP and a second readout bus TS_DN, and information of a plurality of pixels in a synchronous pixel group is read out by the first readout bus and the second readout bus, that is, two readout buses (corresponding to two readout circuits) are used to read out the information of the plurality of pixels in a synchronous pixel group. For example, information of two pixels may be read out synchronously, which can accelerate the readout rate of pixel information and reduce the difficulty of circuit design, thereby improving the frame rate in a case of high resolution. Meanwhile, for an integrated pixel processing circuit, the upper limit of integration time can be further increased, thereby improving the processing performance. In addition, since every y adjacent pixels in the Y pixels form a pixel group 20, where 2≤ y<Y/2, two pixels that are synchronously read out are confined to a smaller region, and compared with the manner of dividing the pixel array into the upper and lower arrays in FIG. 2, the solution of the present disclosure can reduce the deviation of pixel information caused by process deviation and wiring layout while accelerating the readout rate of pixel information, thereby improving the performance of the sensor, and since the readout circuit difference is reflected between adjacent odd-numbered and even-numbered rows, it is more conducive to the extraction of fixed pattern noise.

In an example, each pixel column includes X1 pixel groups, where Y/y = X1, and X1 is an integer; or each pixel column includes (X2 + 1) pixel groups, where Y/y = X2 with a remainder of X3, and the remaining X3 pixels form the last pixel group.

In other words, when Y/y = X1, and X1 is an integer, it means that Y is exactly divisible by y; or when Y/y = X2 with a remainder of X3, it means that Y is not exactly divisible by y. In other words, when Y/y = X1, and X1 is an integer, it means that Y is exactly divisible by y; or when Y/y = X2 with a remainder of X3, it means that Y is not exactly divisible by y.

For example, if Y=12 and y=2, X1=6, that is, each pixel column includes 12 pixels, every two adjacent pixels in the 12 pixels form a pixel group, and there are six pixel groups in total. Each odd-numbered pixel groups is electrically connected to first readout bus, and each even-numbered pixel groups is electrically connected to a second readout bus. Starting from the first pixel group, every odd-numbered pixel group and even-numbered pixel group adjacent to each other form a synchronous pixel group. Information of a plurality of pixels in a synchronous pixel group is read out by the first readout bus and the second readout bus; and the plurality of synchronous pixel groups are read out sequentially. A total of three synchronous pixel groups as described above are read out sequentially.

If Y=11 and y=2, X2=5, X3=1, that is, each pixel column includes 11 pixels, every two adjacent pixels in the 11 pixels form a pixel group, there are 5 pixel groups in total, and the remaining one pixel forms the last pixel group, then the 11 pixels include 6 pixel groups. Each odd-numbered pixel group is electrically connected to the first readout bus, and each even-numbered pixel group is electrically connected to the second readout bus. Starting from the first pixel group, every odd-numbered pixel group and even-numbered pixel group adjacent to each other form a synchronous pixel group, and information of a plurality of pixels in a synchronous pixel group is read out by the first readout bus and the second readout bus; and the plurality of synchronous pixel groups are read out sequentially. A total of two synchronous pixel groups as described above are sequentially read out, information of a plurality of pixels in the fifth pixel group is read out by the first readout bus, and information of the one pixel in the sixth pixel group is read out by the second readout bus.

In an example, the information of the plurality of pixels in a synchronous pixel group 30 being read out includes: the information of one pixel in the odd-numbered pixel group and the information of one pixel in the even-numbered pixel group being read out simultaneously.

For example, one pixel forms a pixel group 20. The first pixel group and the second pixel group form the first synchronous pixel group. Information of the first pixel and the second pixel of the first synchronous pixel group is read out simultaneously. The third pixel group and the fourth pixel group form the second synchronous pixel group. After the first synchronous pixel group is read out, information of the third pixel and the fourth pixel of the second synchronous pixel group is read out simultaneously. In conclusion, by analogy, each synchronous pixel group is read out sequentially.

If every two adjacent pixels in the plurality of pixels form a pixel group 20, that is, two pixels form a pixel group 20. The first pixel group and the second pixel group form the first synchronous pixel group, information of the first pixel and the third pixel of the first synchronous pixel group is read out simultaneously. After the information of the first pixel and the third pixel is read out, information of the second pixel and the fourth pixel of the first synchronous pixel group is read out simultaneously. The third pixel group and the fourth pixel group form the second synchronous pixel group. After the first synchronous pixel group is read out, information of the fifth pixel and the seventh pixel of the second synchronous pixel group is read out simultaneously, and after the information of the fifth pixel and the seventh pixel is read out, information of the sixth pixel and the eighth pixel is read out simultaneously. In conclusion, by analogy, each synchronous pixel group 30 is read out sequentially.

That is, information of two pixels in the pixel array can be read out simultaneously, further accelerating the readout rate of the pixels.

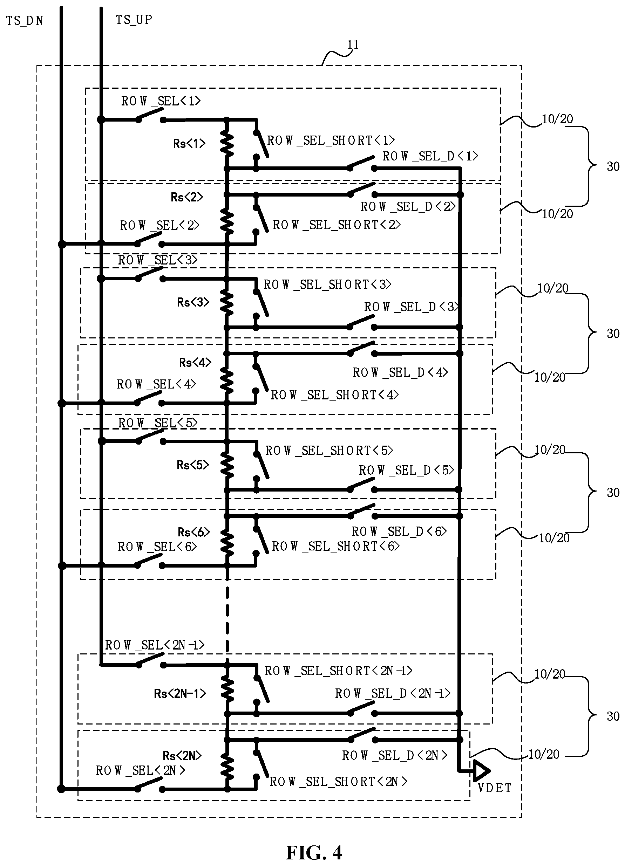

As shown in FIG. 4, the pixel column 11 is electrically connected to a reset terminal; the pixel 10 includes a pixel resistor Rs, a first selected switch ROW_SEL, a second selected switch ROW_SEL_D, and a shorting switch ROW_SEL_SHORT. The first selected switch ROW_SEL is configured to conduct the pixel resistor Rs to the corresponding first readout bus TS_UP or second readout bus TS_DN, and the second selected switch ROW_SEL_D is configured to conduct the pixel resistor Rs to the reset terminal VDET.

The shorting switch is connected in parallel with the pixel resistor Rs, and is configured to short-circuit the pixel resistor Rs. Pixel resistors Rs of the plurality of pixels in each pixel column 11 are sequentially connected in series. When the first selected switch ROW_SEL and the second selected switch ROW_SEL_D are closed and the shorting switch ROW_SEL_SHORT is open, the information of the pixel is read out.

As shown in FIG. 4, a first terminal of a first selected sub-switch is electrically connected to the first readout bus TS_UP or the second readout bus TS_DN, the second terminal of the first selected sub-switch is electrically connected to a first end of a pixel resistor Rs, the second end of the pixel resistor Rs is electrically connected to a first terminal of a second selected sub-switch, and the second terminal of the second selected sub-switch is electrically connected to the reset terminal VDET.

In some examples, the voltage value of the reset terminal VDET is 0.

It should be noted that the pixel being read out as described above refers to the pixel resistor Rs being read out. Rs<1> in FIG. 4 refers to the first pixel resistor, Rs<2> refers to the second pixel resistor, and so on.

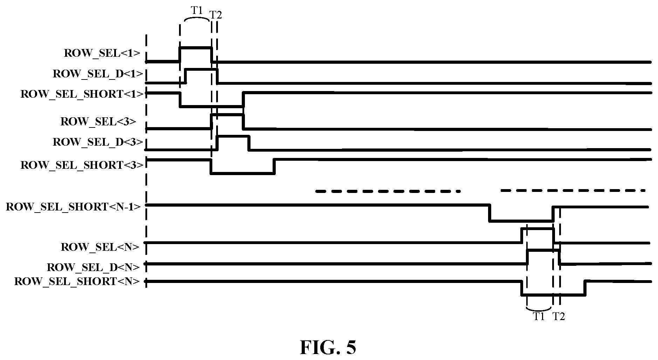

Referring to FIG. 4 and FIG. 5, it can be known that one pixel forms one pixel group 20. That is, the first pixel group includes the first pixel resistor Rs<1>, the first first selected sub-switch ROW_SEL<1>, the first second selected sub-switch ROW_SEL_D<1> and the first shorting switch ROW_SEL_SHORT<1>; the second pixel group includes the second pixel resistor Rs<2>, the second first selected sub-switch ROW_SEL<2>, the second second selected sub-switch ROW_SEL_D<2> and the second shorting switch ROW_SEL_SHORT<2>; the third pixel group includes the third pixel resistor Rs<3>, the third first selected sub-switch ROW_SEL<3>, the third second selected sub-switch ROW_SEL_D<3> and the third shorting switch ROW_SEL_SHORT<3>; the fourth pixel group includes the fourth pixel resistor Rs<4>, the fourth first selected sub-switch ROW_SEL<4>, the fourth second selected sub-switch ROW_SEL_D<4> and the fourth shorting switch ROW_SEL_SHORT<4>.

That is, the first pixel group is electrically connected to the first readout bus TS_UP; the second pixel group is electrically connected to the second readout bus TS_DN; the third pixel group is electrically connected to the first readout bus TS_UP; and the fourth pixel group is electrically connected to the second readout bus TS_DN. Subsequent pixel groups are deduced by analogy.

As mentioned above, starting from the first pixel group, every odd-numbered pixel group and even-numbered pixel group adjacent to each other form a synchronous pixel group. For example, the first pixel group and the second pixel group form the first synchronous pixel group, and the third pixel group and the fourth pixel group form the second synchronous pixel group.

FIG. 5 illustrates a timing diagram of reading out the pixel array by using the first readout bus. In a first time period, the first first selected sub-switch ROW_SEL<1> and the first second selected sub-switch ROW_SEL_D<1> are closed, and the first shorting switch ROW_SEL_SHORT<1> is open, the first pixel resistor Rs<1> is read out.

In a second time period, the third first selected sub-switch ROW_SEL<3> and the third second selected sub-switch ROW_SEL_D<3> are closed, the third shorting switch ROW_SEL_SHORT<3> is open, the first shorting switch ROW_SEL_SHORT<1> remains open, other selected switches are open, other shorting switches are closed, the third pixel resistor Rs<3> is read out.

By analogy, in each time period, the corresponding selected switches are closed, the other selected switches are open, the corresponding shorting switch is open, the shorting switch corresponding to the previous time period also remains open, and the other shorting switches are closed.

Similarly, the timing diagram of reading out the pixel array through the second readout buses is the same as the above timing diagram.

In the first time period, the second first selected sub-switch ROW_SEL<2> and the second second selected sub-switch ROW_SEL_D<2> are closed, the second shorting switch ROW_SEL_SHORT<2> is open, the second pixel resistor Rs<2> is read out.

In the second time period, the fourth first selected sub-switch ROW_SEL<4> and the fourth second selected sub-switch ROW_SEL_D<4> are closed, the fourth shorting switch ROW_SEL_SHORT<4> is open, the second shorting switch ROW_SEL_SHORT<2> remains open, the other selected switches are open, the other shorting switches are closed, the fourth pixel resistor Rs<4> is read out.

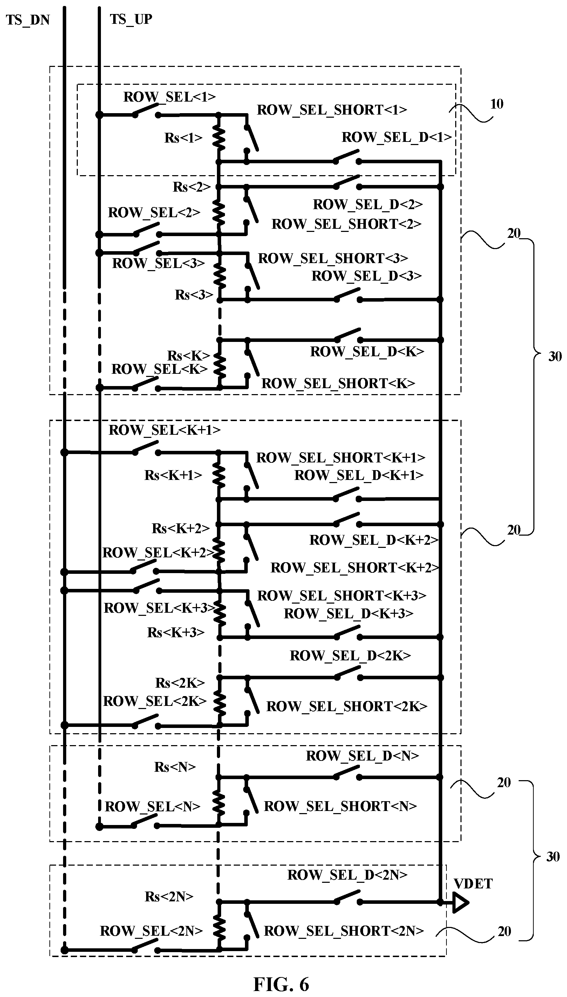

As shown in FIG. 6, in some examples, K adjacent pixels in the figure form one pixel group. The K adjacent pixels are K pixels that are sequentially adjacent. That is, the first pixel group includes the first pixel resistor Rs<1>, the first first selected sub-switch ROW_SEL<1>, the first second selected sub-switch ROW_SEL_D<1>, the first shorting switch ROW_SEL_SHORT<1>, the second pixel resistor Rs<2>, the second first selected sub-switch ROW_SEL<2>, the second second selected sub-switch ROW_SEL_D<2>, the second shorting switch ROW_SEL_SHORT<2> ..., the K-th pixel resistor, the K-th first selected sub-switch, the K-th second selected sub-switch and the K-th shorting switch; the second pixel group includes the (K+1)-th pixel resistor, the (K+1)-th first selected sub-switch, the (K+1)-th second selected sub-switch, the (K+1)-th shorting switch ..., the 2K-th pixel resistor, the 2K-th first selected sub-switch, the 2K-th second selected sub-switch and the 2K-th shorting switch, where K is an even number.

That is, the first pixel group is electrically connected to the first readout bus TS_UP; and the second pixel group is electrically connected to the second readout bus TS_DN, and so on for the subsequent pixel groups.

As mentioned above, starting from the first pixel group, every odd-numbered pixel group and even-numbered pixel group adjacent to each other form a synchronous pixel group. For example, the first pixel group and the second pixel group form the first synchronous pixel group; the third pixel group and the fourth pixel group form the second synchronous pixel group.

It should be noted that, according to the proposed resistor connection manner, it can be extended to the case where K rows of pixel resistors are read out by the first readout circuit, K rows of pixel resistors are read out by the second readout circuit, where K ≤ half of the number of rows of the pixel array, and the smaller the value of K is, the easier the fixed pattern noise information is extracted. The larger the value of K, the larger the deviation caused by the wiring of the readout bus TS in the two resistor readout circuits that read out simultaneously, and more difficult it is to extract the difference information of the readout circuits.

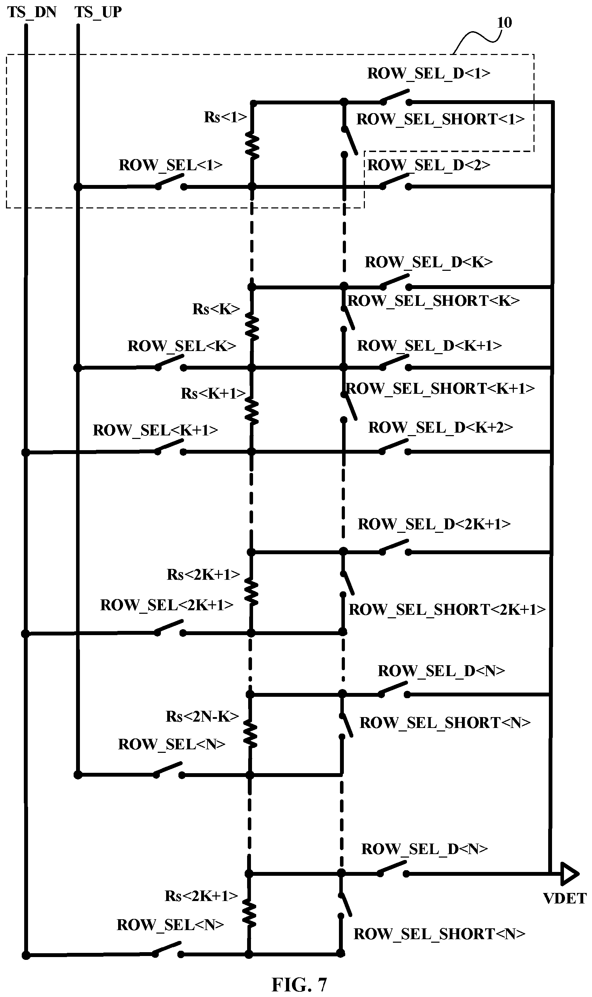

As shown in FIG. 7, FIG. 7 is a circuit diagram of another pixel array according to some examples of the present disclosure. A pixel 10 includes a pixel resistor Rs, selected switches ROW and a shorting switch ROW_SEL_SHORT. The selected switches ROW are configured to conduct the pixel resistor Rs to its corresponding first readout bus TS_UP or second readout bus TS_DN, and also conduct the pixel resistor Rs to the reset terminal VDET.

The shorting switch is connected in parallel with the pixel resistor Rs, and is configured to short the pixel resistor Rs. Pixel resistors Rs of the plurality of pixels in each pixel column 1 are sequentially connected in series. When the selected switches ROW are closed and the shorting switch is open, information of the pixel is read out.

As shown in FIG. 7, the selected switches ROW include a first selected sub-switch ROW_SEL and a second selected sub-switch ROW_SEL_D, where a first terminal of the first selected sub-switch ROW_SEL is electrically connected to the first readout bus TS_UP or the second readout bus TS_DN, a second terminal of the first selected sub-switch ROW_SEL is electrically connected to a second end of the pixel resistor Rs, a first end of the pixel resistor Rs is electrically connected to a first terminal of the second selected sub-switch ROW_SEL_D, and a second terminal of the second selected sub-switch ROW_SEL_D is electrically connected to the reset terminal VDET. A first terminal of the shorting switch ROW_SEL_SHORT is electrically connected to a first terminal of the second selected sub-switch ROW_SEL_D, and a second terminal of the shorting switch ROW_SEL_SHORT is electrically connected to a second end of the pixel resistor Rs.

Referring to FIG. 5, during each stage in which information of two pixels is read out, the shorting switches of the two pixels that were read out in the previous stage remain open.

For example, when the third first selected sub-switch ROW_SEL<3> and the third second selected sub-switch ROW_SEL_D<3> are closed, and the third shorting switch ROW_SEL_SHORT<3> is open, at this time, the first shorting switch ROW_SEL_SHORT<1> remains open until the third first selected sub-switch ROW_SEL<3> is open, and then the first shorting switch ROW_SEL_SHORT<1> is closed. In this way, when a new pixel is read out, the pixels that have already been read out may be prevented from having errors.

In other examples, the value of y may be 2, 3, 4, Y/8, Y/4, etc. Different values of y will finally result in different grouping manners, but the corresponding readout scheme of each group may still adopt the scheme described in the foregoing examples.

Some examples of the present disclosure provide a readout method for a pixel array, and the method is applied to the above pixel array.

A readout phase of the pixel array includes a plurality of readout stages arranged in sequence. The plurality of readout stages include the first readout stage to the N-th readout stage, where N = M/2, and M is the number of rows of the pixel array.

The readout method includes: in each readout stage, information of two pixels is read out by the first readout bus and the second readout bus, respectively.

Starting from the first pixel group, every odd-numbered pixel group and even-numbered pixel group adjacent to each other form a synchronous pixel group. Information of a plurality of pixels in a synchronous pixel group is read out; and the plurality of synchronous pixel groups are read out in sequence.

That the information of the pixel is read out means that the pixel conducts to the corresponding first readout bus or second readout bus.

In some examples, information of a plurality of pixels in a synchronous pixel group is read out, including: information of one pixel in the odd-numbered pixel group and information of one pixel in the even-numbered pixel group in the synchronous pixel group being read out simultaneously.

A pixel column is electrically connected to a ground terminal; a pixel includes a pixel resistor, a first selected sub-switch, a second selected sub-switch and a shorting switch.

In the first readout stage, the first selected sub-switches and the second selected sub-switches of two pixels corresponding to the first readout stage are closed, the shorting switches of the two pixels corresponding to the first readout stage are open, and the first selected sub-switches and the second selected sub-switches of the other pixels except the two pixels read out in the first readout stage are open, and the shorting switches of said other pixels are closed.

For example, in FIG. 5, the timing diagram where the first first selected sub-switch ROW_SEL<1> and the second second selected sub-switch ROW_SEL_D<1> are closed and the first shorting switch ROW_SEL_SHORT<1> is open belongs to the first readout stage.

In each readout stage from the second readout stage to the N-th readout stage, the first selected sub-switches and the second selected sub-switches of the two pixels corresponding to the readout stage are closed, and the shorting switches of the two pixels corresponding to the readout stage are open; the first selected sub-switches and the second selected sub-switches of other pixels, except the two pixels read out in the readout stage, are all open, and shorting switches of the two pixels read out in the readout stage and the two pixels read out in the previous readout stage are open, while shorting switches of other pixels are closed.

For example, the subsequent timing diagrams in FIG. 5 belong to the second readout stage to the N-th readout stage.

Referring to FIG. 5, during time period T1, the pixel resistor is read out only when both the first selected sub-switch ROW_SEL and the second selected sub-switch ROW_SEL_D are both closed.

In some examples, in each readout stage, for each pixel, the first selected sub-switch ROW_SEL is closed before the second selected sub-switch ROW_SEL_D is closed, and the closed duration of the first selected sub-switch ROW_SEL is equal to the closed duration of the second selected sub-switch ROW_SEL_D. In this way, the readout circuit may be more stable.

According to the readout method for a pixel array provided in some examples of the present disclosure, the readout rate of pixels may be improved by using two readout circuits to read out simultaneously. That is, in the case of high resolution, the frame rate is increased. Meanwhile, for the integrated pixel processing circuit, the upper limit of the integration time can be further increased, thereby improving the performance.

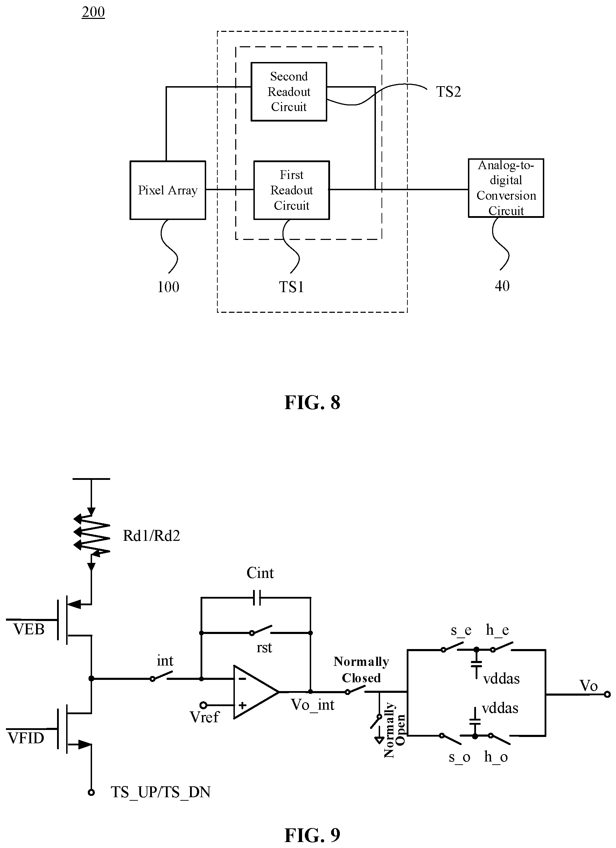

As shown in FIG. 8, some examples of the present disclosure provide an image sensor 200. The image sensor 200 includes a pixel array 100, a first readout circuit TS1, a second readout circuit TS2, and an analog-to-digital conversion circuit 40.

The pixel array 100 is configured to acquire infrared signals. The first readout circuit TS1 includes a plurality of first readout buses TS_UP, and the second readout circuit TS2 includes a plurality of second readout buses TS_DN. The first readout circuit TS1 and the second readout circuit TS2 are configured to convert the infrared signals into detection signals and output the detection signals as analog signals. The analog-to-digital conversion circuit 40 is electrically connected to the first readout circuit TS1 and the second readout circuit TS2.

As shown in FIG. 9, the first readout circuit includes a first pixel bias resistor Rd1, the second readout circuit includes a second pixel bias resistor Rd2, and the first pixel bias resistor Rd1 and the second pixel bias resistor Rd2 are located on a same side of the pixel array (referring to FIG. 3). For example, the first pixel bias resistor Rd1 and the second pixel bias resistor Rd2 are located on the same side along the extension direction of the pixel columns.

The underlying devices of the first readout circuit and the second readout circuit may be arranged in a form of cross-matching with each other, which may avoid the output difference caused by using two readout circuits and improve the performance of the sensor.

In some examples, the first readout circuit includes a plurality of first readout sub-circuits, and the second readout circuit includes a plurality of second readout sub-circuits. Each first readout sub-circuit is electrically connected to a first readout bus TS_UP that is connected to one pixel column 11. Each second readout sub-circuit is electrically connected to a second readout bus TS_DN that is connected to one pixel column 11.

Wherein each readout sub-circuit includes a bias resistor.

In the image sensor provided in some examples of the present disclosure, the image sensor acquires an infrared signal by using a pixel array, two readout circuits quickly convert the infrared signal into a detection signal and output the detection signal as an analog signal, and an analog-to-digital conversion circuit receives the analog signal and finally converts the acquired infrared signal into an image.

In the description of this specification, specific features, structures, materials, or characteristics may be combined in a suitable manner in any one or more embodiments or examples.

Finally, it should be noted that the above embodiments are only used to illustrate the technical solutions of the present disclosure, not to limit them; although the present disclosure has been described in detail with reference to the foregoing embodiments, those of ordinary skill in the art should understand that they can still modify the technical solutions described in the foregoing embodiments, or equivalently replace some of the technical features; and these modifications or replacements do not make the essence of the corresponding technical solutions depart from the spirit and scope of the technical solutions of the embodiments of the present disclosure.

## Claims

1. A pixel array, comprising: a plurality of pixel columns, wherein for each column of the plurality of pixel columns,
the pixel column comprises Y pixels;
wherein the pixel column comprises a plurality of pixel groups, and each pixel group of the plurality of pixel groups comprises y adjacent pixels of the Y pixels or one pixel of the Y pixels, wherein 2≤y<Y/2;
wherein each odd-numbered pixel group of the plurality of pixel groups is electrically connected to a first readout bus, each even-numbered pixel group of the plurality of pixel groups is electrically connected to a second readout bus;
wherein the pixel column comprises a plurality of synchronous pixel groups, each synchronous pixel group of the plurality of synchronous pixel groups comprises an odd-numbered pixel group and an even-numbered pixel group adjacent to each other in the plurality of pixel groups, information of a plurality of pixels in each synchronous pixel group of the plurality of synchronous pixel groups is read out by the first readout bus and the second readout bus, and the plurality of synchronous pixel groups are read out sequentially;
wherein information of a pixel being read out indicates that the pixel conducts to a corresponding first readout bus or second readout bus.

2. The pixel array according to claim 1, wherein the plurality of pixel groups are X1 pixel groups, wherein Y/y = X1, and X1 is an integer; or
the plurality of pixel groups are (X2 + 1) pixel groups, wherein Y/y = X2 with a remainder of X3, and the remaining X3 pixels form a last pixel group among the (X2 + 1) pixel groups.

3. The pixel array according to claim 1, wherein the information of the plurality of pixels in each synchronous pixel group of the plurality of synchronous pixel groups being read out comprises:
information of one pixel in the odd-numbered pixel group and information of one pixel in the even-numbered pixel group in the synchronous pixel group being read out simultaneously.

4. The pixel array according to claim 1, wherein
each pixel of the Y pixels comprises a pixel resistor, a first selected switch, a second selected switch, and a shorting switch;
wherein the first selected switch is configured to conduct the pixel resistor to the corresponding first readout bus or the second readout bus, and the second selected switch is configured to conduct the pixel resistor to a reset terminal;
the shorting switch is connected in parallel with the pixel resistor, and is configured to be capable of short-circuiting the pixel resistor;
the pixel resistors of the Y pixels are sequentially connected in series; and
in a case where the first selected switch and the second selected switch corresponding to a pixel are closed and the shorting switch corresponding to the pixel is open, information of the pixel is read out.

5. The pixel array according to claim 4, wherein
a first terminal of the first selected sub-switch is electrically connected to the first readout bus or the second readout bus, a second terminal of the first selected sub-switch is electrically connected to a first end of the pixel resistor, a second end of the pixel resistor is electrically connected to a first terminal of the second selected sub-switch, and a second terminal of the second selected sub-switch is electrically connected to the reset terminal.

6. The pixel array according to claim 4 or 5, wherein in a stage in which information of two pixels in a synchronous pixel group is read out, the shorting switches of two pixels read out in an immediately preceding stage remain open.

7. The pixel array according to claim 1, wherein every two adjacent pixels in the Y pixels form a pixel group; each odd-numbered pixel group is electrically connected to the first readout bus, and each even-numbered pixel group is electrically connected to the second readout bus;
starting from a first pixel group, every odd-numbered pixel group and even-numbered pixel group adjacent to each other form a synchronous pixel group, information of each pixel in a synchronous pixel group is read out, and the plurality of synchronous pixel groups are read out in sequence.

8. The pixel array according to claim 1, wherein each pixel of the Y pixels forms a pixel group; each odd-numbered pixel group is electrically connected to the first readout bus, and each even-numbered pixel group is electrically connected to the second readout bus;
starting from a first pixel group, every odd-numbered pixel group and even-numbered pixel group adjacent to each other form a synchronous pixel group, information of each pixel in a synchronous pixel group is read out, and the plurality of synchronous pixel groups are read out in sequence.

9. A readout method for a pixel array, wherein the pixel array comprises a plurality of pixel columns, wherein for each of the plurality of pixel columns, the pixel column comprises Y pixels, wherein the pixel column comprises a plurality of pixel groups, each pixel group of the plurality of pixel groups comprises y adjacent pixels of the Y pixels or one pixel of the Y pixels, wherein 2≤ y<Y/2, each odd-numbered pixel group of the plurality of pixel groups is electrically connected to a first readout bus, and each even-numbered pixel group of the plurality of pixel groups is electrically connected to a second readout bus, wherein the pixel column comprises a plurality of synchronous pixel groups, and each synchronous pixel group of the plurality of synchronous pixel groups comprises an odd-numbered pixel group and an even-numbered pixel group adjacent to each other in the plurality of pixel groups;
a readout stage of the pixel array comprises a first readout stage to an N-th readout stage arranged in sequence, wherein N = M/2, and M is a number of rows of the pixel array;
the readout method comprises:
in each readout stage from the first readout stage to the N-th readout stage, information of two pixels in a synchronous pixel group being read out by the first readout bus and the second readout bus respectively;
sequentially reading out the plurality of synchronous pixel groups, wherein information of each pixel in each synchronous pixel group of the plurality of synchronous pixel groups is read out;
wherein information of a pixel being read out indicates that the pixel conducts to a corresponding first readout bus or second readout bus.

10. The readout method according to claim 9, wherein the information of the two pixels in the synchronous pixel group being read out by the first readout bus and the second readout bus respectively comprises:
information of one pixel in the odd-numbered pixel group in the synchronous pixel group being read out by one of the first readout bus and the second readout bus; and information of one pixel in the even-numbered pixel group in the synchronous pixel group being read out by the other of the first readout bus and the second readout bus.

11. The readout method according to claim 9, wherein each pixel of the Y pixels comprises a pixel resistor, a first selected sub-switch, a second selected sub-switch, and a shorting switch;
the readout method comprises:
in the first readout stage, the first selected sub-switches and the second selected sub-switches of two pixels in a first synchronous pixel group are closed, the shorting switches of the two pixels are open, the first selected sub-switches and the second selected sub-switches of other pixels except the two pixels read out in the first readout stage are open, and the shorting switches of other pixels except the two pixels read out are closed;
in each readout stage from the second readout stage to the N-th readout stage, the first selected sub-switches and the second selected sub-switches of the two pixels in the synchronous pixel group corresponding to the readout stage are closed; the first selected sub-switches and the second selected sub-switches of other pixels except the two pixels read out in the readout stage are all open, and the shorting switches of the two pixels read out in the readout stage and two pixels read out in an immediately preceding stage are open, while the shorting switches of other pixels are closed.

12. The readout method according to claim 11, wherein in each readout stage from the first readout stage to the N-th readout stage, for each pixel in the readout stage, the first selected sub-switch is closed before the second selected sub-switch is closed, and a closed duration of the first selected sub-switch is equal to the closed duration of the second selected sub-switch.

13. The readout method according to any one of claims 9 to 12, wherein the readout method comprises: simultaneously reading out a plurality of synchronous pixel groups in a same row in the plurality of pixel columns.

14. An image sensor, comprising:
the pixel array according to any one of claims 1 to 8, configured to acquire an infrared signal;
a first readout circuit and a second readout circuit, wherein the first readout circuit comprises a plurality of first readout buses, the second readout circuit comprises a plurality of second readout buses, and the first readout circuit and the second readout circuit are configured to convert the infrared signal into a detection signal and output the detection signal as an analog signal;
an analog-to-digital conversion circuit electrically connected to the first readout circuit and the second readout circuit.

15. The image sensor according to claim 14, wherein the first readout circuit comprises a first pixel bias resistor, the second readout circuit comprises a second pixel bias resistor, and the first pixel bias resistor and the second pixel bias resistor are located on a same side of the pixel array.

16. The image sensor according to claim 14, wherein the first readout circuit comprises a plurality of first readout sub-circuits, and the second readout circuit comprises a plurality of second readout sub-circuits;
each of the first readout sub-circuits is electrically connected to a first readout bus that is connected to a pixel column, and each of the second readout sub-circuits is electrically connected to a second readout bus that is connected to a pixel column.
